# FASCICULE DE BREVET EUROPEEN

(11) **EP 2 724 791 B1**
(45) Date de publication et mention de la délivrance du brevet: **15.06.2016**
(21) Numéro de dépôt: 13189700.1
(22) Date de dépôt: 22.10.2013
(51) Int. Cl.: B08B 3/02, B60S 3/00

(54) **Installation de lavage de chariot de magasin, en particulier de supermarché**
Waschanlage für Einkaufswagen, insbesondere aus Supermärkten
Facility for washing a shopping trolley, in particular of a supermarket

(30) Priorité: 24.10.2012 FR 1260134
(43) Date de publication de la demande: 30.04.2014
(73) Titulaire: Mutualité Française Anjou - Mayenne, 49480 Saint Sylvain d'Anjou (FR)
(72) Inventeur: Titard, Hugues, 49240 AVRILLE (FR)
(74) Mandataire: Godineau, Valérie

(56) Documents cités:
- EP-A1- 1 516 681
- WO-A1-03/002391

## Description

La présente invention concerne une installation de lavage de chariot de magasin, en particulier de supermarché.

Elle concerne plus particulièrement une installation de lavage de chariot du type comprenant une enceinte de forme générale parallélépipédique comportant au moins une face du dessous formant plancher, une face du dessus et des faces latérales reliant entre elles les faces du dessus et du dessous, ladite enceinte étant munie de moyens, tels que des buses, de projection d'un liquide de nettoyage à l'intérieur de l'enceinte, et étant compartimentée par une cloison en deux chambres de lavage disposées côte à côte.

Une telle installation est connue de la demande internationale WO 03/002391 qui décrit une installation selon le préambule de la revendication 1

Les chariots à roues aptes à être nettoyés par une telle installation sont notamment commercialisés sous la marque CADDIE (marque déposée). Ces chariots se présentent généralement sous forme d'un bac en forme de corbeille, du type cage, porté par un châssis roulant, l'une des parois latérales de ce bac, éventuellement équipée d'un siège enfant, étant surmontée d'une poignée.

Comme le bac et la poignée peuvent être souillés, des systèmes de nettoyage de tels chariots ont été développés comme l'illustre en particulier le brevet US 2005/0214159. Ce brevet décrit une installation de nettoyage de chariots se présentant sous forme d'un tunnel équipé intérieurement de buses de projection de fluide de nettoyage. Ce tunnel est ouvert à chacune de ses extrémités, de sorte que le chariot est introduit par l'une des extrémités du tunnel dans le tunnel et ressort par l'autre extrémité dudit tunnel.

Dans la demande internationale WO 03/002391, le chariot est introduit dans une première chambre puis transféré dans une deuxième chambre avant d'être extrait de l'installation.

Une telle conception d'installation de lavage ne permet pas un nettoyage en temps masqué du chariot. En outre, dans le document US 2005/0214159, comme le chariot ressort à l'extrémité du tunnel opposée à celle par laquelle il a été introduit dans le tunnel, l'opérateur doit, à chaque lavage, faire le tour de l'installation. Il peut en résulter une fatigue physique importante de l'opérateur. En outre, cela impose un sens de circulation du chariot à l'intérieur de l'installation qui nécessite une vigilance permanente de l'opérateur pour respecter ce sens.

Un but de la présente invention est donc de proposer une installation de lavage du type précité dont la conception permet un nettoyage en temps masqué du chariot.

Un autre but de la présente invention est de proposer une installation de lavage dont la conception permet à l'opérateur de ne pas avoir à circuler autour de l'installation, de limiter les risques d'erreur de manipulation, de sorte qu'une telle installation est apte à être utilisée, notamment par des handicapés mentaux, avec un risque d'erreur limité.

A cet effet, l'invention a pour objet une installation de lavage de chariot du type comprenant une enceinte de forme générale parallélépipédique comportant au moins une face du dessous formant plancher, une face du dessus et des faces latérales reliant entre elles les faces du dessus et du dessous, ladite enceinte étant munie de moyens, tels que des buses, de projection d'un liquide de nettoyage à l'intérieur de l'enceinte, et étant compartimentée par une cloison en deux chambres de lavage disposées côte à côte, lesdites chambres étant munies chacune, d'une ouverture obturable d'entrée/sortie de chariot dans l'enceinte, lesdites ouvertures d'entrée/sortie des chambres étant ménagées sur une même face latérale de l'enceinte, caractérisée en ce que l'installation présente des moyens commandés d'entraînement en déplacement d'au moins une partie des moyens de projection d'un liquide de nettoyage d'une chambre de lavage à une autre à travers une ouverture, de préférence obturable, disposée au niveau de ladite cloison compartimentant l'enceinte.

La présence de deux chambres disposées côte à côte et équipées chacune d'une entrée/sortie permet le nettoyage dans une chambre d'un chariot pendant la phase de chargement ou de déchargement d'un autre chariot dans l'autre chambre. Le positionnement des ouvertures d'entrée/sortie d'un même côté de l'enceinte permet de limiter la course à effectuer pour réaliser les opérations de chargement et déchargement du chariot de l'enceinte.

En outre, la présence de moyens commandés d'entraînement en déplacement des moyens de projection de liquide montés mobiles en va et vient entre lesdites chambres permet de simplifier l'architecture de l'installation puisque au moins une partie des moyens de projection de fluide sont communs aux deux chambres.

De préférence, les moyens commandés d'entraînement en déplacement des moyens de projection de liquide d'une chambre à une autre comprennent au moins un rail, dit horizontal, disposé sensiblement parallèlement au plancher de l'enceinte, et transversalement, de préférence orthogonalement, à ladite cloison, ce rail comprenant au moins deux parties de rail disposées l'une dans l'une des chambres, l'autre dans l'autre chambre, ce rail délimitant un chemin de guidage le long duquel les moyens de projection de liquide sont montés mobiles en va-et-vient par l'intermédiaire d'organes d'entraînement en déplacement disposés, de préférence, entre rail et moyens de projection de liquide.

Les moyens de projection de fluide comprennent des buses disposées à intervalle le long d'une rampe montée mobile en va-et-vient le long d'une structure support délimitant un chemin de guidage s'étendant parallèlement à ladite cloison.

De préférence, la structure support est montée mobile en va et vient le long du au moins un rail dit horizontal.

Au moins une partie de la rampe porte-buses est montée mobile en monte et baisse par rapport à la structure support.

De préférence encore, la rampe porte-buses affecte la forme d'un U inversé équipé, au niveau de son âme, d'un bras de liaison à la structure support.

Généralement, l'ouverture ménagée dans la cloison est une ouverture obturable équipée d'un organe d'obturation commandé, ladite ouverture affectant de préférence la forme d'une fente s'étendant depuis le bord supérieur en direction du bord inférieur de ladite cloison.

Généralement, l'ouverture d'entrée/sortie de chaque chambre de l'enceinte est équipée d'une porte de fermeture.

De préférence encore, les moyens de commande des moyens d'entraînement en déplacement des moyens de projection de liquide de nettoyage sont configurés pour commander l'entraînement en déplacement des moyens de projection de liquide en fonction de l'état ouvert ou fermé des portes.

En pratique, les moyens de projection de fluide sont entraînés en déplacement uniquement en position fermée des portes des chambres.

De préférence encore, l'installation comporte des moyens de commande en déplacement de l'organe d'obturation de l'ouverture ménagée dans la cloison pour le passage de la position fermée à la position ouverte de ladite ouverture en fonction de l'état ouvert ou fermé des chambres.

De préférence, pour chaque chambre, la sortie d'évacuation de chariot est commune à l'entrée d'introduction de chariot et est délimitée par une même ouverture.

Généralement, l'enceinte jouxte, côté face latérale de l'enceinte opposée à celle munie des entrées et sorties, un local technique à l'intérieur duquel sont logés au moins un réservoir de stockage de liquide de nettoyage et des moyens de pompage aptes à alimenter les moyens de projection de fluide de nettoyage de l'enceinte en fluide de nettoyage contenu dans ledit réservoir.

De préférence, l'enceinte et le local technique contigus sont portés par un châssis roulant et forment un ensemble de type remorque équipé d'un timon d'attelage.

Généralement, chaque chambre de l'installation possède un organe dit pousseur d'aide au moins à l'entrée, et éventuellement à la sortie, du chariot de l'enceinte par poussée dudit chariot, ledit organe pousseur étant monté sur un convoyeur à bande disposé au niveau du plancher de ladite chambre.

De préférence, l'installation comporte des moyens de signalisation du début et/ou de la fin d'un cycle de nettoyage, ces moyens de signalisation étant disposés à l'extérieur de l'enceinte.

De préférence, l'installation comporte des moyens de récupération et de traitement des eaux usées.

L'invention a encore pour objet un procédé de lavage du chariot à l'aide d'une installation du type précité, ledit procédé comprenant, dans au moins l'un des cycles de fonctionnement, une étape d'introduction au moins partielle d'un chariot dans une chambre de l'installation, une étape de fermeture de l'organe d'obturation fermant l'entrée de ladite chambre, une étape de lavage du chariot caractérisé en ce que ledit procédé comprend, préalablement à l'étape d'ouverture de ladite chambre, à l'état fermé desdites chambres, une étape d'entraînement des moyens de projection de liquide entre ladite chambre et une autre chambre.

L'invention sera bien comprise à la lecture de la description suivante d'exemples de réalisation, en référence aux dessins annexés dans lesquels :

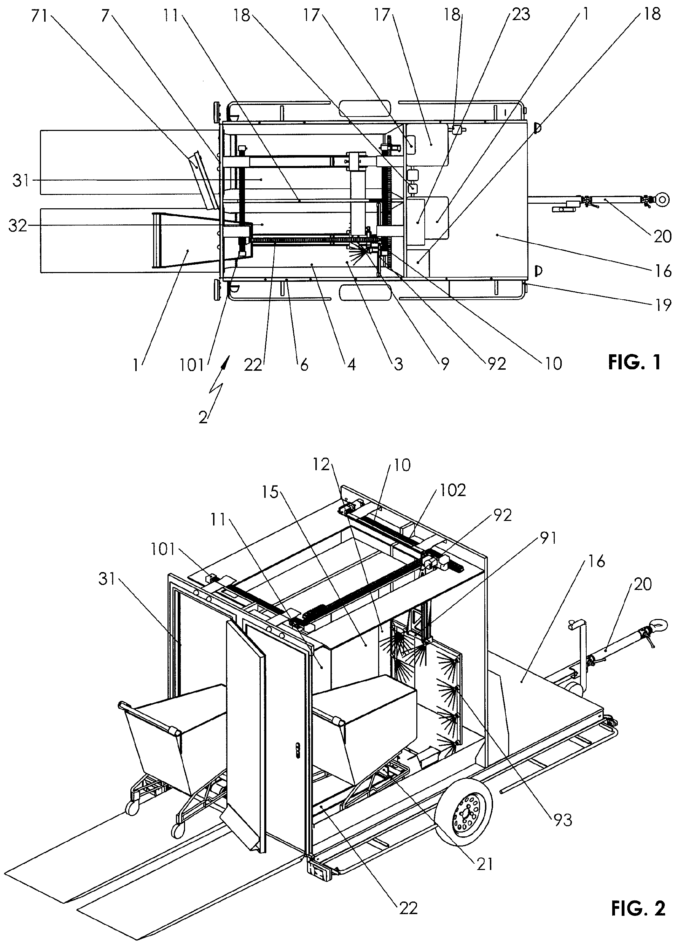

La figure 1 représente une vue de dessus d'une installation conforme à l'invention ;
La figure 2 représente une vue partielle de l'installation de la figure 1 dans laquelle des parois ont été omises pour mieux visualiser l'intérieur de l'installation ;

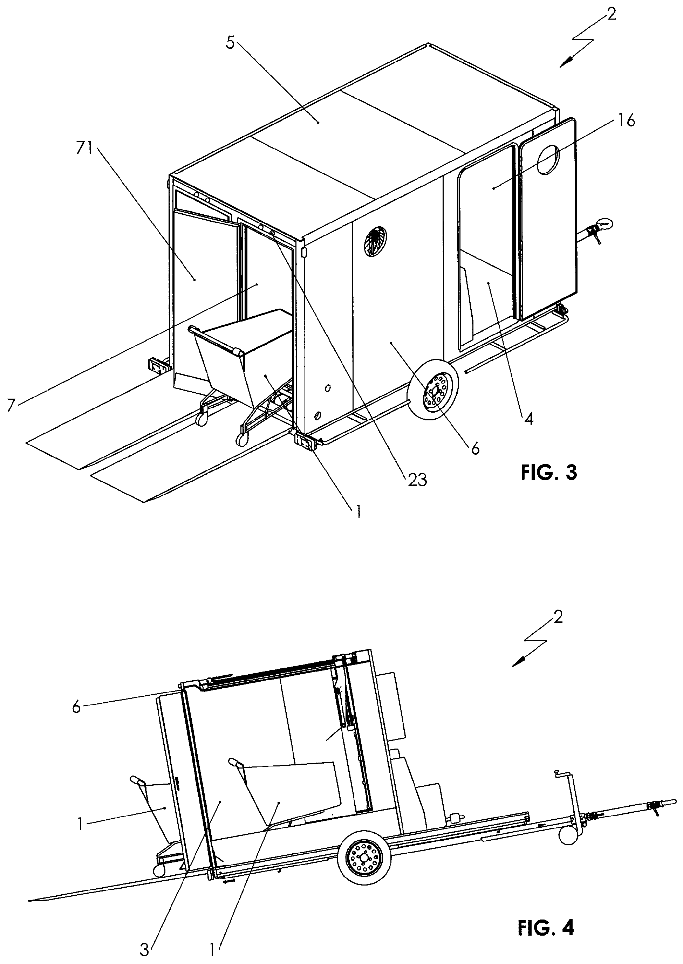

La figure 3 représente une vue en perspective de l'installation de la figure 1 ;
La figure 4 représente une vue partielle de côté de l'installation de la figure 1 dans laquelle certaines parois latérales ont été omises pour mieux voir l'intérieur de l'installation.

Comme mentionné ci-dessus, l'installation 2, objet de l'invention, est plus particulièrement destinée au lavage d'engins roulant au sol, en particulier de chariots 1 de magasin, notamment de supermarché. Par extension, l'installation est apte à nettoyer des paniers de supermarché en les posant sur un "faux" chariot.

L'installation 2, telle que représentée aux figures, est une installation mobile attelable à un véhicule tracteur par l'intermédiaire d'un timon 20 d'attelage. Cette installation aurait pu, de manière similaire, être réalisée fixe.

Cette installation 2 comporte une enceinte 3 et un local 11 technique contigu portés par un châssis roulant équipé dudit timon 20 d'attelage. L'enceinte 3, de forme générale parallélépipédique, comprend une face 4 du dessous formant plancher, une face 5 du dessus, et des faces 6 latérales reliant entre elles les faces du dessus et du dessous.

Cette enceinte 3 est compartimentée par une cloison 11 séparant ladite enceinte en deux chambres représentées en 31 et 32 aux figures. Ces deux chambres sont disposées côte à côte et sont munies chacune d'une ouverture 7 d'entrée du chariot à l'intérieur de l'enceinte 3, et de sortie d'évacuation de chariot hors de l'enceinte 3.

Les ouvertures 7 d'entrée/sortie des chambres sont disposées sur une même face latérale de l'enceinte 3 correspondant ici à la face latérale de l'enceinte 3 opposée à celle jouxtant le local 16 technique.

L'ouverture 7 d'entrée/sortie de chaque chambre est par ailleurs munie d'un organe d'obturation, tel qu'une porte d'accès, représenté en 71 aux figures. Ces portes d'accès peuvent être équipées de moyens, tels qu'un capteur, de détection de l'état (ouvert ou fermé) de la porte. Au niveau du seuil de chaque porte, il est prévu une rampe inclinée d'accès à l'intérieur de l'enceinte 3.

L'enceinte 3 comporte encore des moyens 9 de projection d'un liquide de nettoyage, et des moyens 10 commandés d'entraînement en déplacement d'au moins une partie des moyens 9 de projection d'un liquide de nettoyage d'une chambre de lavage à une autre à travers au moins une ouverture 12, de préférence obturable, disposée au niveau de la cloison 11 compartimentant l'enceinte 3. Dans l'exemple représentée, cette ouverture est formée, d'une part, par l'espace laissé libre entre un bord vertical de la cloison et la face latérale de l'enceinte 3 jouxtant le local 11 technique et, d'autre part, par l'espace laissé libre entre le bord horizontal supérieur de la cloison et la face 5 du dessus de l'enceinte.

Les moyens 9 de projection de fluide comprennent des buses 93 disposées à intervalle le long d'une rampe 91 en forme générale de U inversé équipé au niveau de son âme d'un mât ou bras de liaison à une structure support 92. Cette structure support 92 affecte la forme d'au moins un rail. La rampe 91 porte-buses est montée mobile en va et vient le long dudit rail suspendu ou fixé directement à la face 5 du dessus de l'enceinte. Ce rail de la structure support s'étend sensiblement parallèlement à ladite cloison 11 de l'enceinte.

La rampe 91 porte-buses balaye ainsi dans le sens de la longueur l'emplacement occupé par le chariot à l'intérieur d'une chambre. La rampe est généralement équipée d'au moins trois buses, l'une, centrale, disposée au niveau de l'âme du U de la rampe, et deux buses latérales disposées au niveau de chacune des branches du U constitutifs de la rampe.

Le bras ou mât de liaison du U à la structure support est, de préférence, un bras ou mât télescopique de sorte qu'au moins une partie de la rampe 91 porte-buses est montée mobile en monte et baisse par rapport à la structure 92 support.

Généralement de l'eau froide est envoyée par l'intermédiaire de moyens de pompage disposés dans le local 11 technique. La buse centrale effectue un mouvement de rotation autour de son axe et un second mouvement de montée/descente ce qui permet, pendant l'avance de la rampe, de se rapprocher du fond du chariot et de nettoyer un peu plus précisément la poignée de manutention dudit chariot.

Pendant les phases de nettoyage du chariot, l'eau souillée est récupérée dans un bac 13 disposé dans le plancher de l'enceinte et traitée par un système de filtration.

La pulvérisation d'eau froide peut être suivie d'une pulvérisation d'agent bactéricide qui s'opère au moyen des mêmes buses ou de trois autres buses supplémentaires.

Les réservoirs 17 de fluide de nettoyage et les moyens de pompage sont logés à l'intérieur du local 16 technique. Ce local 16 technique renferme également le système de traitement des eaux usées.

L'installation 2 comprend encore des moyens 10 commandés d'entraînement en déplacement du chariot 1 d'au moins une partie des moyens 9 de projection de liquide d'une chambre à une autre à travers au moins une ouverture 12 réalisée ici obturable et disposée dans une cloison 11 compartimentant l'enceinte 3.

Cette ouverture 12, réalisée de préférence sous forme d'une fente verticale ou en L à l'envers avec une branche verticale et une branche horizontale, est obturée par un volet 15 de type panneau. Ce volet 15 est équipé de moyens de commande en déplacement pour le passage de la position fermée à la position ouverte de ladite ouverture 12 en fonction de l'état ouvert ou fermé des portes de chaque chambre. Ce volet se déplace généralement sensiblement parallèlement à ladite cloison par coulissement le long de rail(s) équipant la cloison.

En général, l'ouverture 12 est en position ouverte lorsque les chambres sont en position fermée.

Les moyens 10 commandés d'entraînement en déplacement d'au moins une partie des moyens 9 de projection de liquide comprennent ici deux rails 101, et des organes 102 d'entraînement en déplacement de moyens 9 de projection de liquide le long desdits rails. Lesdits rails dits horizontaux, sont des rails parallèles disposés sensiblement parallèlement au plancher de l'enceinte 3, et transversalement de préférence orthogonalement à ladite cloison 11. Chaque rail comprend une partie disposée dans l'une des chambres, et une autre partie disposée dans l'autre chambre 32. Chaque rail 101 délimite un chemin de guidage le long duquel les moyens 9 de projection de liquide sont montés mobiles en va-et-vient par l'intermédiaire d'organes 102 d'entraînement en déplacement disposés, de préférence, entre rail 101 et moyens 9 de projection de liquide. La présence de deux rails au lieu d'un permet d'éviter un montage en porte à faux de la structure 92 support sur le rail 101.

En particulier, le rail constitutif de la structure 92 support de la rampe 91 porte-buses est disposé entre les rails 101 et monté à coulissement le long des rails 101 pour le passage d'une chambre à une autre des moyens 9 de projection du liquide.

Ce rail constitutif de la structure 92 support de la rampe 91 porte-buses peut être relié au(x) rail(s) 101 par un chariot, des galets motorisés, une transmission à chaîne, un ensemble motorisé ou autre. Tous ces éléments sont aptes à former les organes 102 d'entraînement en déplacement des moyens 9 de projection de liquide disposés entre rail 101 et moyens 9 de projection.

La commande en fonctionnement de ces organes d'entraînement peut s'opérer à l'aide d'une unité de pilotage apte à émettre des signaux électriques de commande en direction desdits organes lorsqu'un certain nombre de conditions sont remplies.

Généralement, des signaux électriques sont émis pour permettre le passage des moyens 9 de projection de liquide d'une chambre à une autre lorsque les portes des chambres sont en position fermée.

Pour faciliter l'entrée et la sortie des chariots de l'enceinte, chaque chambre 31, 32, de l'installation possède encore un organe 21 dit pousseur monté sur un convoyeur 22 à bande disposé au niveau du plancher de ladite chambre.

La direction de déplacement du convoyeur à bande s'étend sensiblement parallèlement à la cloison 11 compartimentant l'enceinte.

Enfin, l'installation comporte encore des moyens 23 de signalisation du début ou de la fin d'un cycle de nettoyage, ces moyens de signalisation étant disposés à l'extérieur de l'enceinte. Ces moyens 23 de signalisation peuvent être formés par des témoins lumineux.

Au moins les moyens de signalisation, d'entraînement, et de projection de fluide sont pilotés par une unité de pilotage. Cette unité de pilotage est formée par une unité électronique et informatique de traitement et de calcul. Ladite unité peut être réalisée sous la forme d'un circuit électronique muni d'un microcontrôleur ou d'un microprocesseur associé à une mémoire de stockage de données.

Ainsi, lorsque dans la suite de la description il est précisé que des moyens donnés sont configurés pour réaliser une opération donnée, cela signifie que le système électronique et informatique qui forme lesdits moyens comprend des instructions informatiques permettant de réaliser ladite opération.

Dans le cas où les portes de fermeture des ouvertures d'entrée/sortie de l'enceinte sont à ouverture/fermeture automatique, l'unité de pilotage comprend également des moyens de commande en ouverture/fermeture desdites portes.

En pratique, le fonctionnement d'une installation de lavage, telle que décrite ci-dessus, est le suivant :
L'opérateur introduit partiellement un chariot dans la chambre 31 de lavage. Pour ce faire, il fait rouler le chariot sur la rampe d'accès jusqu'à une position prédéterminée dans laquelle le convoyeur est actionné pour permettre à l'organe 21 pousseur du convoyeur 22 de venir en prise avec le dessous du chariot. Cette venue en prise peut être détectée. Le convoyeur continue à fonctionner pour amener le chariot jusqu'à une position de fin de course à l'intérieur de la chambre de lavage. Cette position de fin de course peut être matérialisée par une butée de fin de course (non représentée).

L'opérateur ferme la porte de la chambre 31 et appuie sur un bouton de départ de cycle de lavage.

En variante, la porte de la chambre peut être refermée automatiquement et le lavage débute automatiquement. Au cours de ce lavage, les buses et en particulier les rampes porte-buses sont déplacées à l'intérieur de la chambre de lavage suivant l'axe longitudinal de ladite chambre le long du rail constitutif de la structure 92 support et projettent le ou les fluide(s) de nettoyage en direction du chariot.

Le lavage comprend généralement un cycle de lavage à l'eau froide et un cycle de désinfection avec un liquide bactéricide.

Une fois le lavage achevé, si la porte de l'autre chambre est fermée, l'ouverture de la cloison 11 est ouverte par actionnement automatique du volet. Les moyens 9 de projection de fluide sont déplacés en passant, pour au moins une partie, à travers l'ouverture de la cloison pour être amenés dans l'autre chambre.

Pour permettre un tel déplacement, la structure 92 support des moyens 9 de projection de fluide se déplace le long du ou des rail(s) 101 horizontaux sensiblement orthogonaux à la cloison.

Une fois les moyens 9 de projection de fluide amenés dans l'autre chambre, l'ouverture dans la cloison est refermée. Le voyant « lavage terminé » s'illumine. L'opérateur ouvre la porte et retire le chariot lavé. Pendant la phase de lavage, l'opérateur a introduit un chariot dans l'autre chambre de sorte que le lavage de cet autre chariot peut s'effectuer en temps masqué.

Une fois l'opération de déchargement effectuée, l'opérateur peut introduire un nouveau chariot dans la chambre. Un nouveau cycle de lavage tel que décrit ci-dessus peut s'opérer.

Avant l'évacuation du chariot de la chambre et en position fermée de la porte de la chambre, le convoyeur équipant ladite chambre se met en route et ramène son organe pousseur dans une position initiale dans laquelle il sera prêt à pousser un nouveau chariot introduit dans la chambre.

## Revendications

1. Installation (2) de lavage de chariot (1) du type comprenant une enceinte (3) de forme générale parallélépipédique comportant au moins une face (4) du dessous formant plancher, une face (5) du dessus et des faces (6) latérales reliant entre elles les faces (4, 5) du dessus et du dessous, ladite enceinte (3) étant munie de moyens (9), tels que des buses, de projection d'un liquide de nettoyage à l'intérieur de l'enceinte (3), et étant compartimentée par une cloison (11) en deux chambres (31, 32) de lavage disposées côte à côte, lesdites chambres (31, 32) étant munies chacune, d'une ouverture (7) obturable d'entrée/sortie d'introduction de chariot (1) dans l'enceinte (3), lesdites ouvertures (7) d'entrée/sortie des chambres étant ménagées sur une même face (6) latérale de l'enceinte (3), **caractérisée en ce que** l'installation (2) présente des moyens (10) commandés d'entraînement en déplacement d'au moins une partie des moyens (9) de projection d'un liquide de nettoyage d'une chambre de lavage à une autre à travers au moins une ouverture (12), de préférence obturable, disposée au niveau de ladite cloison (11) compartimentant l'enceinte (3).

2. Installation selon la revendication 1,
**caractérisée en ce que** les moyens (10) commandés d'entraînement en déplacement des moyens (9) de projection de liquide d'une chambre à une autre comprennent au moins un rail (101), dit horizontal, disposé sensiblement parallèlement au plancher de l'enceinte (3), et transversalement, de préférence orthogonalement, à ladite cloison (11), ce rail comprenant au moins deux parties de rail disposée l'une dans l'une des chambres, l'autre dans l'autre chambre, ce rail (101) délimitant un chemin de guidage le long duquel les moyens (9) de projection de liquide sont montés mobiles en va-et-vient par l'intermédiaire d'organes (102) d'entraînement en déplacement disposés, de préférence, entre rail (101) et moyens (9) de projection de liquide.

3. Installation (2) selon l'une des revendications 1 ou 2,
**caractérisée en ce que** les moyens (9) de projection de fluide comprennent des buses (93) disposées à intervalle le long d'une rampe (91) montée mobile en va-et-vient le long d'une structure (92) support délimitant un chemin de guidage s'étendant parallèlement à ladite cloison (11).

4. Installation (2) selon la revendication 3, prise en combinaison avec la revendication 2,
**caractérisée en ce que** la structure (92) support est montée mobile en va et vient le long dudit au moins un rail (101) dit horizontal.

5. Installation (2) selon la revendication 3,
**caractérisée en ce qu'**au moins une partie de la rampe (91) porte-buses est montée mobile en monte et baisse par rapport à la structure (92) support.

6. Installation (2) selon la revendication 3,
**caractérisée en ce que** la rampe (91) porte-buses affecte la forme d'un U inversé équipé au niveau de son âme d'un bras de liaison à la structure (92) support.

7. Installation (2) selon l'une des revendications 1 à 6,
**caractérisée en ce que** ladite au moins une ouverture (12) ménagée dans la cloison (11) est une ouverture obturable équipée d'un organe d'obturation (15) commandé, ladite ouverture (12) affectant, de préférence, au moins la forme d'une fente s'étendant depuis le bord supérieur en direction du bord inférieur de ladite cloison (11).

8. Installation (2) selon l'une des revendications 1 à 7,
**caractérisée en ce que** l'enceinte (3) jouxte, côté face (6) latérale de l'enceinte opposée à celle munie des ouvertures (7) d'entrée/sortie, un local (16) technique à l'intérieur duquel sont logés au moins un réservoir (17) de stockage de liquide de nettoyage et des moyens (18) de pompage aptes à alimenter les moyens (9) de projection de fluide de nettoyage de l'enceinte en fluide de nettoyage contenu dans ledit réservoir (17).

9. Installation (2) selon l'une des revendications 1 à 8,
**caractérisée en ce que** l'enceinte (3) et le local (16) technique contigus sont portés par un châssis (19) roulant et forment un ensemble de type remorque équipé d'un timon (20) d'attelage.

10. Installation (2) selon l'une des revendications 1 à 9,
**caractérisée en ce que** chaque chambre (31, 32) de l'installation possède un organe, dit pousseur, (21) d'aide au moins à l'entrée, et éventuellement à la sortie, du chariot (1) de l'enceinte (3) par poussée dudit chariot (1), ledit organe (21) pousseur étant monté sur un convoyeur (22) à bande disposé au niveau du plancher de ladite chambre.

11. Installation (2) selon l'une des revendications 1 à 10,
**caractérisée en ce que** l'installation comporte des moyens (23) de signalisation du début et/ou de la fin d'un cycle de nettoyage, ces moyens de signalisation étant disposés à l'extérieur de l'enceinte.

## Patentansprüche

1. Waschanlage (2) für Wagen (1) der Bauart, umfassend eine allgemein parallelepipedische Hülle (3), die mindestens eine den Boden bildende Unterseite (4), eine Oberseite (5) und seitliche Seiten (6), welche die Unter- und Oberseite (4, 5) miteinander verbinden, aufweist, wobei die Hülle (3) mit Mitteln (9) wie Projektionsdüsen einer Reinigungsflüssigkeit in das Innere der Hülle (3) ausgestattet ist und von einer Trennwand (11) in zwei nebeneinander angeordnete Waschkammern (31, 32) unterteilt ist,
wobei jede Kammer (31, 32) mit einer verschließbaren Eingabe-Eingangs-/Ausgangsöffnung (7) von Wagen (1) in die Hülle (3) ausgestattet ist, wobei die Eingangs-/Ausgangsöffnungen (7) der Kammern auf einer gleichen seitlichen Seite (6) der Hülle (3) ausgebildet sind, **dadurch gekennzeichnet, dass** die Anlage (2) gesteuerte Antriebsmittel (10) der Verlagerung von mindestens einem Teil der Projektionsmittel (9) einer Reinigungsflüssigkeit von einer Waschkammer zu einer anderen durch mindestens eine vorzugsweise verschließbare Öffnung (12) aufweist, die im Bereich der die Hülle (3) unterteilenden Trennwand (11) angeordnet ist.

2. Anlage nach Anspruch 1,
**dadurch gekennzeichnet, dass** die gesteuerten Antriebsmittel (10) der Verlagerung der Flüssigkeitsprojektionsmittel (9) von einer Kammer zu einer anderen mindestens eine horizontale Schiene (101) umfassen, die etwa parallel zum Boden der Hülle (3) und transversal, vorzugsweise orthogonal, zur Trennwand (11) angeordnet ist, wobei diese Schiene mindestens zwei Schienenabschnitte umfasst, von denen einer in einer der Kammern, der andere in der anderen Kammer, angeordnet ist, wobei diese Schiene (101) einen Führungsweg begrenzt, entlang dessen die Flüssigkeitsprojektionsmittel (9) mit Hilfe von Verlagerungsantriebsorganen (102), die vorzugsweise zwischen Schiene (101) und Flüssigkeitsprojektionsmittel (9) angeordnet sind, hin und her beweglich montiert sind.

3. Anlage (2) nach einem der Ansprüche 1 oder 2,
**dadurch gekennzeichnet, dass** die Fluidprojektionsmittel (9) Düsen (93) umfassen, die im Intervall entlang einer Rampe (91) angeordnet sind, die entlang einer Stützstruktur (92), welche einen Führungsweg begrenzt, der sich parallel zur Trennwand (11) erstreckt, hin und her beweglich montiert sind.

4. Anlage (2) nach Anspruch 3, herangezogen in Kombination mit Anspruch 2, **dadurch gekennzeichnet, dass** die Stützstruktur (92) entlang der mindestens einen horizontalen Schiene (101) hin und her beweglich montiert ist.

5. Anlage (2) nach Anspruch 3,
**dadurch gekennzeichnet, dass** mindestens ein Abschnitt der düsentragenden Rampe (91) in Bezug zur Stützstruktur (92) nach oben und unten beweglich montiert ist.

6. Anlage (2) nach Anspruch 3,
**dadurch gekennzeichnet, dass** die düsentragenden Rampe (91) die Form eines umgekehrten U hat, das im Bereich seines Stegs einen Verbindungsarm mit der Stützstruktur (92) ausgestattet ist.

7. Anlage (2) nach einem der Ansprüche 1 bis 6,
**dadurch gekennzeichnet, dass** die mindestens eine Öffnung (12), die in der Trennwand (11) ausgebildet ist, eine verschließbare Öffnung ist, die mit einem gesteuerten Verschlussorgan (15) ausgestattet ist, wobei die Öffnung (12) vorzugsweise mindestens die Form eines Schlitzes annimmt, der sich vom oberen Rand in Richtung des unteren Rands der Trennwand (11) erstreckt.

8. Anlage (2) nach einem der Ansprüche 1 bis 7,
**dadurch gekennzeichnet, dass** die Hülle (3) an der seitlichen Seite (6) der Hülle, die der gegenüberliegt, die mit den Eingangs-/Ausgangsöffnungen (7) ausgestattet ist, einen Technikraum (16) säumt, in dessen Innern mindestens ein Reinigungsflüssigkeits-Vorratsreservoir (17) und Pumpmittel (18) untergebracht sind, die imstande sind, die Reinigungsfluidprojektionsmittel (9) der Hülle mit Reinigungsfluid, das in dem Reservoir (17) enthalten ist, zu versorgen.

9. Anlage (2) nach einem der Ansprüche 1 bis 8,
**dadurch gekennzeichnet, dass** die aneinander angrenzende Hülle (3) und der Technikraum (16) von einem Fahrwerk (19) getragen werden und eine Einheit der Bauart Anhänger, ausgestattet mit einer Anhängerdeichsel (20), bilden.

10. Anlage (2) nach einem der Ansprüche 1 bis 9,
**dadurch gekennzeichnet, dass** jede Kammer (31, 32) der Anlage ein Schuborgan (21) zur Unterstützung mindestens der Einführung und eventuell der Herausführung des Wagens (1) aus der Hülle (3) durch Schieben des Wagens (1) besitzt, wobei das Schuborgan (21) auf einem Bandförderer (22) montiert ist, der im Bereich des Bodens der Kammer angeordnet ist.

11. Anlage (2) nach einem der Ansprüche 1 bis 10,
**dadurch gekennzeichnet, dass** die Anlage Anzeigemittel (23) des Beginns und/oder des Ende seines Reinigungszyklus aufweist, wobei diese Anzeigemittel außerhalb der Hülle angeordnet sind.

## Claims

1. A facility (2) for washing a shopping cart (1) of the type comprising an enclosure (3) with a generally parallelepiped shape including at least a bottom face (4) forming a floor, a top face (5) and side faces (6) connecting the top and bottom faces (4, 5) to one another, said enclosure (3) being provided with means (9), such as nozzles, for spraying a cleaning liquid inside the enclosure (3), and being compartmentalized by a partition (11) into two washing chambers (31, 32) positioned side by side,
said chambers (31, 32) each being provided with a closable inlet/outlet opening (7) for introducing a cart (1) into the enclosure (3), said inlet/outlet openings (7) of the chambers being arranged on a same side face (6) of the enclosure (3), **characterized in that** the facility (2) has controlled means (10) for driving the movement of at least part of the cleaning liquid spraying means (9) from one washing chamber to another through at least one opening (12), preferably closable, positioned at said partition (11) compartmentalizing the enclosure (3).

2. The facility according to claim 1,
**characterized in that** the controlled means (10) driving the movement of the liquid spraying means (9) from one chamber to another comprise at least one so-called horizontal rail (101), positioned substantially parallel to the floor of the enclosure (3), and transversely, preferably orthogonally, to said partition (11), this rail comprising at least two rail parts positioned one in one of the chambers, the other in the other chamber, this rail (101) defining a guide path along which the liquid spraying means (9) are mounted moving back and forth by means of movement driving members (102) preferably positioned between the rail (101) and the liquid spraying means (9).

3. The facility (2) according to one of claims 1 or 2,
**characterized in that** the fluid spraying means (9) comprise nozzles (93) positioned at intervals along a ramp (91) mounted movably in a back-and-forth movement along a support structure (92) defining a guide path extending parallel to said partition (11).

4. The facility (2) according to claim 3, combined with claim 2,
**characterized in that** the support structure (92) is mounted moving back and forth along said at least one so-called horizontal rail (101).

5. The facility (2) according to claim 3,
**characterized in that** at least part of the nozzle support ramp (91) is mounted moving upward and downward relative to the support structure (92).

6. The facility (2) according to claim 3,
**characterized in that** the nozzle support ramp (91) assumes a reverse U shape equipped at its core with a connecting arm to the support structure (92).

7. The facility (2) according to one of claims 1 to 6,
**characterized in that** said at least one opening (12) arranged in the partition (11) is a closable opening equipped with a controlled closing member (15), said opening (12) preferably assuming at least the form of a slit extending from the upper edge toward the lower edge of said partition (11).

8. The facility (2) according to one of claims 1 to 7,
**characterized in that** the enclosure (3) adjoins, on the side face (6) side of the enclosure opposite that provided with the inlet/outlet openings (7), a technical site (16) inside which are housed at least a cleaning liquid storage reservoir (17) and pumping means (18) able to supply the cleaning fluid spraying means (9) of the enclosure with cleaning fluid contained in said reservoir (17).

9. The facility (2) according to one of claims 1 to 8,
**characterized in that** the adjacent enclosure (3) and technical site (16) are supported by a rolling chassis (19) and form an assembly of the trailer type equipped with a drawbar (20).

10. The facility (2) according to one of claims 1 to 9,
**characterized in that** each chamber (31, 32) of the facility has a so-called pushing member (21) assisting at least at the inlet, and optionally at the outlet, of the cart (1) with respect to the enclosure (3) by pushing said cart (1), said pushing member (21) being mounted on a conveyor belt (22) positioned near the floor of said chamber.

11. The facility (2) according to one of claims 1 to 10,
**characterized in that** the facility includes means (23) for signaling the beginning and/or the end of a cleaning cycle, the signaling means being positioned outside the enclosure.
